# EUROPÄISCHE PATENTSCHRIFT

(11) **EP 2 412 574 B1**
(45) Veröffentlichungstag und Bekanntmachung des Hinweises auf die Patenterteilung: **23.09.2020**
(21) Anmeldenummer: 11171850.8
(22) Anmeldetag: 29.06.2011
(51) Int. Cl.: B60Q 1/04, F21S 41/55, F21S 43/50, F21S 45/00

(54) **FAHRZEUGSCHEINWERFER**
VEHICLE HEADLIGHT
PHARE DE VÉHICULE

(30) Priorität: 27.07.2010 AT 12612010
(43) Veröffentlichungstag der Anmeldung: 01.02.2012
(73) Patentinhaber: ZKW Group GmbH, 3250 Wieselburg (AT)
(72) Erfinder: Pemmer, Michael, 3390 Melk (AT)
(74) Vertreter: Patentanwaltskanzlei Matschnig & Forsthuber OG

(56) Entgegenhaltungen:
- EP-A1- 1 886 870
- EP-A2- 1 127 739
- DE-A1- 10 034 526
- DE-A1- 10 156 240
- FR-A1- 2 910 407

## Beschreibung

Die Erfindung betrifft einen Fahrzeugscheinwerfer mit zumindest einem Gehäuse, das durch eine Abdeckscheibe verschlossen wird, wobei der Fahrzeugscheinwerfer zumindest einen Tragrahmen aufweist, wobei der Tragrahmen zur Aufnahme von zumindest einer Lichteinheit geeignet ist und der Tragrahmen zumindest ein Sollbruchstellenelement aufweist, so dass der Tragrahmen im Falle einer Kollision gezielt bricht und so die Aufprallenergie durch Verschieben und/oder Deformieren des Tragrahmens abgeleitet werden kann, wobei das Sollbruchstellenelement als separates Bauteil ausgeführt ist und mittels separaten Befestigungsmitteln am Tragrahmen befestigt ist.

In den letzten Jahren gewinnt im Bereich des Fahrzeugscheinwerferbaus zunehmend das Thema Fußgängerschutz an Bedeutung. Insbesondere hinsichtlich des passiven Schutzes wurden Fußgängerschutzanforderungen gesetzlich festgelegt, um das Verletzungsrisiko von Fußgängern und anderen ungeschützten Verkehrsteilnehmern im Falle eines Zusammenpralls zu verringern.

Dementsprechend gibt es im Stand der Technik eine Reihe von Lösungen zur Minimierung des Verletzungsrisikos von Fußgängern im Falle eines Zusammenstoßes.

Die DE 101 01 789 B4 zeigt beispielsweise einen Scheinwerfer, bei dem das Gehäuse und/oder eine darin befestigte lichtdurchlässige Scheibe Sollbruchstellen in Form verringerter Wandstärken aufweisen. Eine ähnliche Lösung offenbart die DE 699 00 059 T2, wo die Seitenwände des Scheinwerferkörpers bzw. des Gehäuses mechanisch abgeschwächte, verformbare Abschnitte - beispielsweise in Form von Schlitzen oder Nuten - aufweisen, an denen es bei Belastungskonzentrationen zur Bildung von plastischen Scharnieren kommt, die eine geregelte Verformung ermöglichen.

Nachteilig an diesen Lösungen ist, dass zwar das Gehäuse und/oder die Abdeckscheibe des Scheinwerfers Vorrichtungen zum Ableiten von Aufprallenergie aufweisen, dass aber der innere Aufbau der Scheinwerfer dabei unberücksichtigt bleibt. Daher können sich im Fall einer Deformation innenliegende Teile des Scheinwerfers aus dem Gehäuse herausschieben und zu Verletzungen führen.

Die DE 10 2007 047 413 A1 zeigt daher eine Lösung, bei der die Elemente im Inneren des Scheinwerfers Sollbruchstellen aufweisen, sodass diese Elemente im Fall eines Aufpralles kollabieren können, beispielsweise durch teleskopartiges Zusammenschieben. Diese Sollbruchstellen können dadurch realisiert werden, dass die genannten Elemente mehrteilig ausgeführt und nachträglich überlappend miteinander verbunden sind. Die Sollbruchstellen können auch als Materialverjüngungen, Materialknicke oder Materialkerben realisiert werden, die einen gezielten Materialbruch beim Aufprall einleiten. Nachteilig an dieser Lösung ist, dass sich im Zuge einer Kollision nach wie vor Scheinwerferteile, beispielsweise das Lichtmodul, aus dem Gehäuse herausschieben können.

EP1886870 A1 offenbart einen gattungsgemäßen Fahrzeugscheinwerfer.

Außerdem müssen Fahrzeugscheinwerfer immer höhere Ansprüche erfüllen. Beispielsweise wird auch ein sehr leichtes Zittern des Lichtbilds, im Fahrbetrieb auf schlechter Straße, nicht mehr akzeptiert. Dadurch wird es notwendig, die Elemente im Inneren eines Scheinwerfers wesentlich steifer auszuführen, beispielsweise mittels Metallgussverfahren oder aus glasfaserverstärktem Kunststoff. Dies gilt auch für Tragrahmen und Einstellelemente, mit denen die Lichteinheiten üblicherweise am Gehäuse des Fahrzeugscheinwerfers gehalten werden. Durch die erhöhte Steifigkeit der inneren Bauteile ergibt sich das Problem, dass diese im Falle eines Unfalls ebenfalls kaum mehr nachgeben. Das Vorsehen von Sollbruchstellen in Form von Materialverjüngungen und -kerben kann hier aufgrund der Sprödigkeit des Materials nachteilig sein - die Sollbruchstellen könnten aufgrund von Erschütterungen im Normalbetrieb brechen.

Es ist daher eine Aufgabe der Erfindung, die genannten Nachteile des Stands der Technik zu verbessern und das Verletzungsrisiko durch Fahrzeugscheinwerfer im Fall einer Kollision mit Fußgängern zu minimieren.

Diese Aufgabe wird mit einem eingangs erwähnten Fahrzeugscheinwerfer erfindungsgemäß dadurch gelöst, dass das Sollbruchstellenelement als separates Bauteil ausgeführt ist und mittels separaten Befestigungsmitteln am Tragrahmen befestigt ist.

Dank der Erfindung ist sichergestellt, dass der Tragrahmen im Falle einer Kollision gezielt bricht und so die Aufprallenergie durch Verschieben und/oder Deformieren des Tragrahmens abgeleitet werden kann. Damit können die gesetzlichen Fußgängerschutzanforderungen erfüllt werden, insbesondere dann, wenn der Tragrahmen nicht aus Kunststoff sondern beispielsweise aus Metall, wie Aluminiumdruckguss oder Magnesiumguss, oder aus glasfaserverstärktem Kunststoff gefertigt ist. Bevorzugt besteht das Sollbruchstellenelement aus einem anderen Material (z.B. Kunststoff) als der Tragrahmen selbst.

In einer Variante der Erfindung weist der Tragrahmen zumindest einen ersten Tragrahmenteil und zumindest einen zweiten Tragrahmenteil auf und das Sollbruchstellenelement ist zwischen dem ersten und dem zweiten Tragrahmenteil angeordnet. In einer weiteren Variante der Erfindung ist zwischen dem ersten und dem zweiten Tragrahmenteil ein Verbindungsrahmenteil vorgesehen und zumindest ein Sollbruchstellenelement ist zwischen dem ersten Tragrahmenteil und dem Verbindungsstück und/oder zumindest ein Sollbruchstellenelement zwischen dem zweiten Tragrahmenteil und dem Verbindungsstück und/oder zumindest ein Sollbruchstellenelement am Verbindungsstück angeordnet.

Der Tragrahmen weist zur Aufnahme des Sollbruchstellenelements beispielsweise eine Aussparung/Unterbrechung auf.

Dabei weist das Sollbruchstellenelement vorzugsweise zumindest eine Materialschwächung zum gezielten Brechen auf. Diese Materialschwächung kann beispielsweise als Einkerbung, Vertiefung oder Verdünnung im Tragrahmen realisiert sein.

Des Weiteren ist es von Vorteil, wenn das Sollbruchstellenelement eine sich günstigerweise durch einen Großteil des Elements erstreckende schlitzartige Freistellung aufweist. Diese Freistellung unterstützt die Wirkung des Sollbruchstellenelements, indem sie das Brechen im Kollisionsfall begünstigt und erleichtert.

Die Freistellung verläuft günstigerweise parallel zu den Rändern der Aussparung/Unterbrechung im Tragrahmen.

In einer Variante der Erfindung wird die schlitzartige Freistellung an ihrem oberen Ende auf Seiten der Oberseite des Tragrahmens und/oder an ihrem unteren Ende auf Seiten der Unterseite des Tragrahmens von einer Materialschwächung begrenzt. Das obere Ende bzw. die Oberseite des Tragrahmens bezeichnet hier diejenige Seite, die im eingebauten Zustand in Fahrtrichtung orientiert ist. Grundsätzlich kann die/können die Materialschwächung/en auch auf der gegenüberliegenden Seite angeordnet sein.

In einer weiteren Variante der Erfindung ist die schlitzartige Freistellung innerhalb des Sollbruchstellenelements ausgeführt und wird an ihrem oberen und an ihrem unteren Ende von einer Materialschwächung abgeschlossen.

Wenn die schlitzartige Freistellung im eingebauten Zustand parallel zur Richtung einer erwarteten Krafteinwirkung angeordnet ist, kann eine optimale Funktion der Sollbruchstelle sichergestellt werden. Dadurch, dass die Kraftwirkung in dieselbe Richtung wie die Freistellung verläuft, bricht die Sollbruchstelle rasch und die Aufprallenergie kann abgeleitet werden.

In einer weiteren Ausführungsform der Erfindung ist das Sollbruchstellenelement als Schraubdom mit einem rundlaufenden Klemmabschnitt ausgeführt und ist mit einer Schraube als Befestigungsmittel im Tragrahmen befestigt, wobei Materialschwächungen zwischen Klemmabschnitt und Schraubdom ausgeführt sind. Damit können die Abmessungen des Sollbruchstellenelements verkleinert werden, weiters reicht für den Einbau ein Bohrloch zur Aufnahme der Schraube und des zugehörigen Schraubendoms aus. Im Normalfall reicht ein solches Sollbruchstellenelement zur stabilen Verbindung der Teile des Tragrahmens aus, im Prinzip kann aber eine beliebige Anzahl von solchen Sollbruchstellenelementen verwendet werden. Es ist auch möglich, an einem Tragrahmen diese Variante mit der weiter oben beschriebenen Variante zu kombinieren.

In einer Variante der Erfindung weist das Gehäuse zumindest eine Gehäuse-Sollbruchstelle auf. Diese Sollbruchstelle kann beispielsweise als Materialschwächung, Einkerbung oder Vertiefung im Gehäuse ausgeführt sein. Die Gehäuse-Sollbruchstelle kann benachbart zur Abdeckscheibe angeordnet sein. Damit lassen sich die vorteilhaften Wirkungen des erfindungsgemäßen Tragrahmens noch verbessern, indem neben dem Tragrahmen auch noch das Gehäuse gezielt brechen und Aufprallenergie aufnehmen kann.

Im Folgenden wird die Erfindung anhand eines nicht einschränkenden Ausführungsbeispiels, das in der Zeichnung dargestellt ist, näher erläutert. In dieser zeigt schematisch:
Fig. 1 einen Vertikalschnitt durch einen Fahrzeugscheinwerfer gemäß dem Stand der Technik,
Fig. 2 eine erste Ausführungsform des Sollbruchstellenelements des erfindungsgemäßen Fahrzeugscheinwerfers,
Fig. 3 eine zweite Ausführungsform des Sollbruchstellenelements des erfindungsgemäßen Fahrzeugscheinwerfers,
Fig. 4 eine dritte Ausführungsform des Sollbruchstellenelements des erfindungsgemäßen Fahrzeugscheinwerfers, und
Fig. 5 einen Vertikalschnitt durch einen erfindungsgemäßen Fahrzeugscheinwerfer mit dem Sollbruchstellenelement.

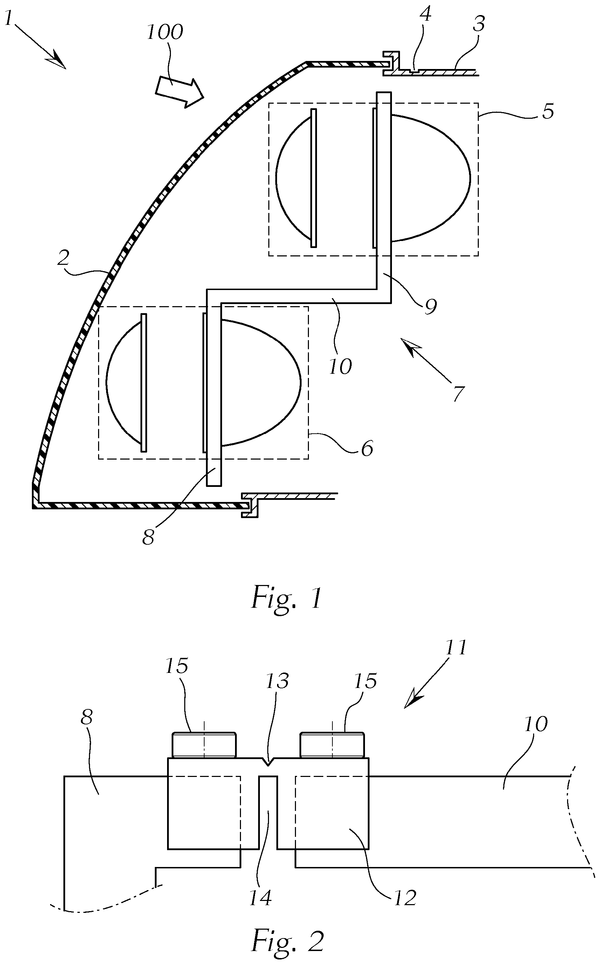

Aus Gründen der Übersichtlichkeit zeigt das in Fig. 1 dargestellte Ausführungsbeispiel nur die für das Verständnis der Erfindung notwendigen Bestandteile eines Fahrzeugscheinwerfers 1 nach dem Stand der Technik im Vertikalschnitt: Üblicherweise werden Lichteinheiten 5, 6 über einen Tragrahmen 7 und Einstellelemente (in den Figuren nicht dargestellt) am Gehäuse 3 des Fahrzeugscheinwerfers 1 gehalten. Die Einstellelemente bestehen beispielsweise aus Lagerschalen, Stellschrauben und Gleitelementen und dienen dazu, die Lichteinheiten in eine Grundeinstellung zu bringen und/oder dynamische Fahrzeuglageänderungen auszugleichen. Das Gehäuse 3 ist mit einer Abdeckscheibe 2 verschlossen. Bei den symbolisch dargestellten Lichteinheiten handelt es sich beispielsweise um Abblendlicht und/oder Fernlicht. Die mit den nachfolgend beschriebenen erfindungsgemäßen Lösungen versehenen Fahrzeugscheinwerfer erfüllen die gesetzlichen Bestimmungen gemäß SAE, ECE, CCC uznd FMVSS.

Die Lichteinheiten 5, 6 in Fig. 1 liegen übereinander und sind in Fahrzeuglängsrichtung versetzt angeordnet. Dies ist bedingt durch das Fahrzeug- bzw. Scheinwerfer-Design. Grundsätzlich können die Lichteinheiten 5, 6 - je nach Design - horizontal nebeneinander und/oder vertikal übereinander angeordnet sein. Hat man drei oder mehr Einheiten können diese auch matrixartig angeordnet sein, sowohl neben- als auch übereinander (bzw. in vertikaler und horizontaler Richtung). Die in den Lichteinheiten 5, 6 verwendeten und in Fig. 1 angedeuteten Linsenprojektionssysteme haben, insbesondere bei Verwendung von Linsen aus Glas, ein hohes Gewicht und stellen dadurch hohe Anforderungen an die haltenden Elemente, insbesondere den Tragrahmen 7 - auch was dessen Formstabilität angeht.

Durch im Fahrbetrieb auftretende Schwingungen können außerdem die Lichteinheiten 5, 6 zu schwingen beginnen. So ein - wenn auch nur sehr leichtes - Zittern des Lichtbilds im Fahrbetrieb auf schlechter Straße wird aufgrund geltender Regelungen nicht mehr akzeptiert. Daher ist es notwendig die Innereien eines Scheinwerfers wesentlich steifer auszuführen. Zur Lösung dieses Problems verwendet man in solchen Fällen Tragrahmen aus sehr stabilen Materialien, wie Aluminium- oder Magnesiumdruckguss. Statt solchen Druckgusslösungen ist auch die Verwendung von glasfaserverstärktem Kunststoff denkbar. Dieser muss dann aber einen erhöhten Faseranteil aufweisen, also wesentlich mehr als die üblichen 10%-20%, beispielsweise 50%-60%; ein solcher Kunststoff weist dann zwar eine hohe Steifigkeit auf, ist aber auch sehr spröde und schwer.

Solche Materialien haben den Nachteil, dass man hier bei einstückiger Ausführung nicht ohne weiteres Materialschwächungen einbringen kann. Zum einen weist der Guss eine gewisse Sprödigkeit auf (je nach Material bzw. Legierung); der Tragrahmen 7 könnte an der Sollbruchstelle, bei Normalbetrieb (etwa durch Stöße bei schlechten Straßenverhältnissen), brechen. Zum anderen lässt sich der Guss nicht mehr so einfach erzeugen. Durch das Einbringen einer Materialschwächung entsteht eine Fließbremse im Werkzeug. Die Vertiefung im Formteil ist im Werkzeug eine Erhebung. Dadurch besteht die Gefahr, dass z. B. der Teil nicht mehr vollständig ausgespritzt wird.

Bei der Verwendung eines Kunststoffs besteht das Problem der Fließbremse natürlich auch. Da dieser aber bessere Fließeigenschaften hat (Thermoplaste), lässt sich dieser Sachverhalt leichter korrigieren.

Der Tragrahmen 7 ist mehrteilig ausgeführt und umfasst einen unteren Tragrahmenteil 8 zur Aufnahme der unteren Lichteinheit 6 und einen oberen Tragrahmenteil 9 zur Aufnahme der oberen Lichteinheit 5, wobei die Tragrahmenteile 8, 9 über ein Verbindungsstück 10 verbunden sind. Die Bezeichnungen "oberer" und "unterer" beziehen sich hier auf die Ansicht des Fahrzeugscheinwerfers 1 in Fig. 1. Laut dieser Ansicht verläuft das Verbindungsstück 10 in horizontaler Richtung, während der obere 9 und der untere Tragrahmenteil 8 vertikal orientiert sind. Natürlich handelt es sich hierbei nur um eine von mehreren möglichen Ausführungsformen. Zur Erhöhung der Steifigkeit sind die Tragrahmenteile im vorliegenden Ausführungsbeispiel mit u-förmigen Profilen ausgeführt.

Aus Gründen der Fußgängersicherheit sind bei Fahrzeugscheinwerfern Maßnahmen zur Senkung des Verletzungsrisikos zu treffen. Dabei ist insbesondere auf Krafteinwirkungen aus der in Fig. 1 mit dem Pfeil 100 bezeichneten Richtung abzustellen. Dazu gibt es die Möglichkeit, im Gehäuse 3 des Fahrzeugscheinwerfers, benachbart zur Abdeckscheibe 2, Gehäuse-Sollbruchstellen 4 vorzusehen. Im Falle einer Kollision bricht das Gehäuse 3 an dieser Stelle und kann durch Verformung Aufprallenergie aufnehmen.

Diese Lösung ist im Prinzip aus dem Stand der Technik bekannt, ist aber beim gegenwärtigen Stand der Scheinwerfertechnik aus den weiter oben genannten Gründen nicht ausreichend. Die erfindungsgemäße Lösung betrifft daher einen Tragrahmen 7 mit zumindest einer Sollbruchstelle 11, die mittels einem Sollbruchstellenelement 12, 17 realisiert ist. Verschiedene Varianten der Erfindung sind in den Figuren 2 bis 4 dargestellt.

Fig. 2 zeigt ein Sollbruchstellenelement 12, das zwischen dem unteren Tragrahmenteil 8 und dem Verbindungsstück 10 angeordnet ist. Das Sollbruchstellenelement 12 ist als separates Bauteil ausgeführt; zur Aufnahme des Elements ist im Tragrahmen 7 eine Aussparung/Unterbrechung ausgeführt, die den Tragrahmen 7 zwischen unterem Tragrahmenteil 8 und Verbindungsstück 10 unterteilt. Das Sollbruchstellenelement 12 wird mit Befestigungsmitteln 15 am Tragrahmen 7 befestigt. Bei den Befestigungsmitteln 15 handelt es sich im vorliegenden Beispiel um Schrauben, möglich sind aber auch andere Lösungen wie Nieten, Klebeverbindungen u.ä.; die Befestigungsmittel sollen jedenfalls eine ordentliche Befestigung des Sollbruchstellenelements 12 erlauben, da ja durch diese Befestigung auch eine Verbindung der Tragrahmenteile erfolgt.

Wie eingangs erwähnt, ist der Tragrahmenquerschnitt im vorliegenden Ausführungsbeispiel u-förmig ausgeführt. Das Sollbruchstellenelement 12 in Fig. 2 ist daher, wie der Tragrahmen 7, bevorzugt ebenfalls u-förmig ausgeführt und wird von oben über die einzelnen Rahmenteile gesteckt, wobei diese hierüber verbunden werden. In einer nicht dargestellten Variante wird das Sollbruchstellenelement 12 als Formrohr ausgebildet. In diesem Fall schiebt man das Sollbruchstellenelement 12 erst auf den ersten Teil des Tragrahmens 7 und schiebt dann den zweiten Rahmenteil ein.

Das Sollbruchstellenelement 12 weist eine erste Materialschwächung 13 in Form einer Einkerbung/Vertiefung zum gezielten Brechen auf. Diese Materialschwächung 13 kann auch als umlaufende Perforierung des Sollbruchstellenelements 12 ausgeführt sein.

Diese erste Materialschwächung 13 ist kombiniert mit einer darunter verlaufenden schlitzartigen Freistellung 14. Im vorliegenden Ausführungsbeispiel ist die erste Materialschwächung 13 am oberen Ende der Freistellung 14 auf Seiten der Oberseite des Tragrahmens 7 angeordnet. Der Begriff "obere" bezieht sich auch hier auf die Orientierung des in Fig. 2 abgebildeten Tragrahmenstücks und hat keinerlei einschränkende Wirkung.

Im Falle eines Aufpralls verformt sich also das Sollbruchstellenelement 12 dank der Freistellung 14 durch die Aufprallenergie und bricht dann an der ersten Materialschwächung 13, sodass sich der Tragrahmen 7 deformieren und so Aufprallenergie aufnehmen, bzw. dem Aufprall ausweichen kann.

Die Freistellung 14 erstreckt sich durch den Großteil des Sollbruchstellenelements 12, bzw. dessen Querschnitt, sodass nur eine geringe Materialschicht zwischen Freistellung 14 und ersten Materialschwächung 13 verbleibt. Die Freistellung 14 verläuft hier im Wesentlichen parallel zu den Rändern der Aussparung/Unterbrechung im Tragrahmen 7.

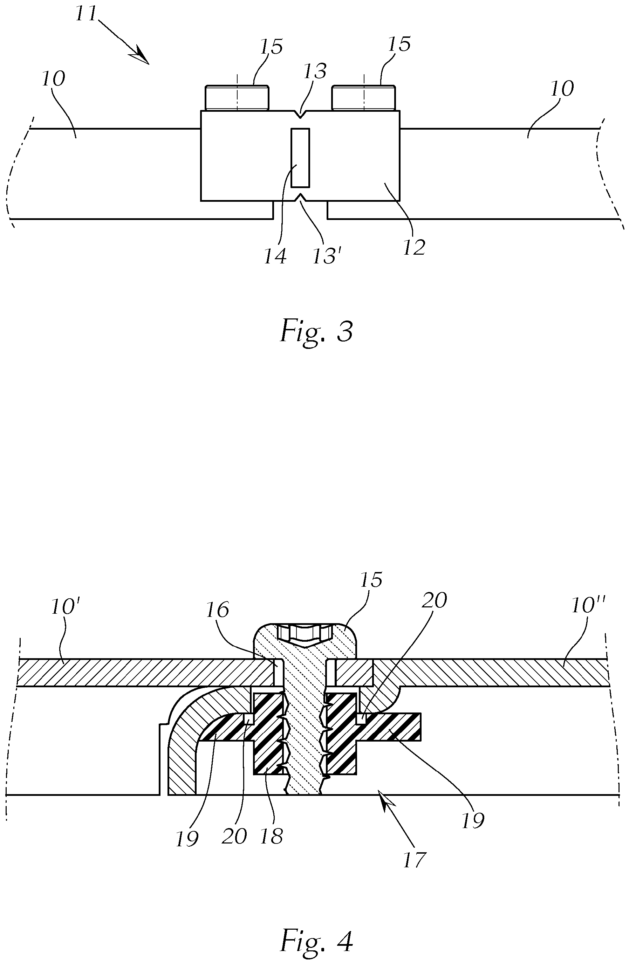

Fig. 3 zeigt eine weitere Variante eines Sollbruchstellenelements 12, wobei das Element im Verbindungsstück 10 angeordnet ist. Hier ist am unteren Ende der Freistellung 14 ("untere" bezieht sich hier wieder auf die Orientierung in Fig. 3) eine zweite Materialschwächung 13', ebenfalls in Form einer Einkerbung/Vertiefung, ausgeführt. Die Freistellung 14 ist damit im Inneren des Sollbruchstellenelements 12 angeordnet und wird an ihrem oberen und an ihrem unteren Ende von je einer Materialschwächung 13, 13' abgeschlossen.

Eine weitere Ausführungsform eines Sollbruchstellenelements 17 ist in Fig. 4 dargestellt. Hier ist das Sollbruchstellenelement 17 im Verbindungsstück 10 des Tragrahmens 7 angeordnet. Die Aussparung/Unterbrechung im Tragrahmen 7 ist dabei so ausgeführt, dass ein erster Verbindungsstückteil 10' (in Fig. 4 links) eine Bohrung 16 aufweist, die mit einer Öffnung in einem zweiten Verbindungsstückteil 10" (in Fig. 4 rechts) korrespondiert, wobei das zweite Verbindungsstückteil 10" das erste Verbindungsstückteil 10' untergreift. Auch eine umgekehrte Ausführung ist möglich. Das Sollbruchstellenelement 17 ist als Schraubendom 18 ausgeführt.

Ein Verbindungsmittel 15, hier eine Schraube, wird durch die Bohrung 16 im ersten Verbindungsstückteil 10' geführt und in den Schraubendom 18 geschraubt. Dadurch werden das erste Verbindungsstückteil 10' und das zweite Verbindungsstückteil 10" fest miteinander verbunden.

Der Schraubendom 18 weist einen rundlaufenden Klemmabschnitt 19 auf, wobei an den Übergängen zum Schraubendom 18 Materialschwächungen 20 ausgeführt sind. Im Falle einer Krafteinwirkung auf den Tragrahmen geben die Materialschwächung 20 nach, die Klemmabschnitte 19 lösen sich vom Schraubendom 18 und die Verbindung zwischen dem ersten 10' und dem zweiten Verbindungsstückteil 10" wird gelöst, sodass der Tragrahmen 7 durch Verformung die Aufprallenergie aufnehmen kann.

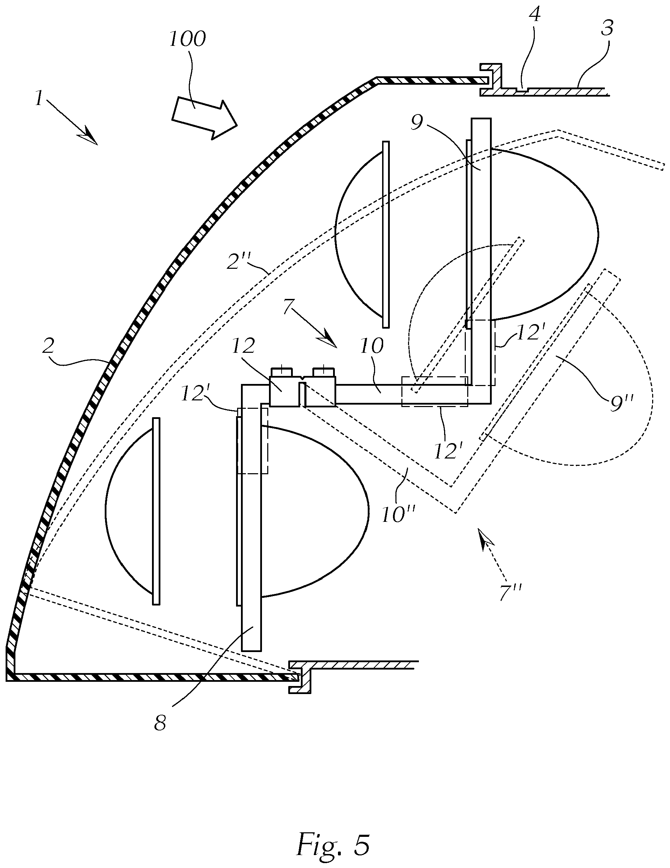

Fig. 5 zeigt nun den erfindungsgemäßen Fahrzeugscheinwerfer 1 aus Fig. 1 mit dem Tragrahmen 7 mit Sollbruchstellenelement 12. Das Sollbruchstellenelement 12 ist dabei einerseits an einer Position zwischen Verbindungsstück und unterem Tragrahmenteil 8 gezeigt; strichliert sind auch weitere optionale Sollbruchstellenelemente 12' eingezeichnet. Diese optionalen Elemente bezeichnen einerseits weitere mögliche Positionen des Sollbruchstellenelements, andererseits können aber auch mehrere Elemente am Tragrahmen 7 angeordnet sein. Theoretisch wäre es auch möglich, alle vier dargestellten Elemente vorzusehen, um so ein optimales Nachgeben des Tragrahmens 7 im Kollisionsfall sicherzustellen. Natürlich können je nach Ausführung des Tragrahmens 7 auch mehr als vier, bzw. beliebig viele Sollbruchstellenelemente 12, 12' vorgesehen sein. Weiters können sowohl Sollbruchstellenelemente 12 gemäß Fig. 2 oder Fig. 3 mit Sollbruchstellenelementen 17 mit Schraubendom 18 gemäß Fig. 4 kombiniert werden.

Fig. 5 zeigt des Weiteren einen Scheinwerfer 1 bei erfolgter Kollision in Krafteinwirkungsrichtung 100 (strichliert): Das Gehäuse 3 gibt an der Gehäuse-Sollbruchstelle 4 nach, die Abdeckscheibe 2 bewegt sich in Richtung des Gehäuseinneren auf die Position, an der eine strichlierte Abdeckscheibe 2" dargestellt ist. Die Abdeckscheibe, die beispielsweise aus unzerbrechlichem Kunststoff wie PC (Polycarbonate) gefertigt ist, wirkt dabei auf den Tragrahmen 7 ein, der am Sollbruchstellenelement 12 bricht und dem Verbindungsstück 10 und dem oberen Tragrahmenteil 9 ermöglicht, auszuweichen - diese Elemente befinden sich dann an der Position, die mit dem strichlierten Verbindungsstück 10" und dem strichlierten oberen Tragrahmenteil 9" angedeutet ist. So wird das Verletzungsrisiko durch Scheinwerferinnenteile deutlich reduziert.

## Patentansprüche

1. Fahrzeugscheinwerfer (1) mit zumindest einem Gehäuse (3), das durch eine Abdeckscheibe (2) verschlossen wird, wobei der Fahrzeugscheinwerfer zumindest einen Tragrahmen (7) aufweist, wobei der Tragrahmen (7) zur Aufnahme von zumindest einer Lichteinheit (5, 6) geeignet ist und der Tragrahmen (7) zumindest ein Sollbruchstellenelement (12, 17) aufweist, so dass der Tragrahmen im Falle einer Kollision gezielt bricht und so die Aufprallenergie durch Verschieben und/oder Deformieren des Tragrahmens abgeleitet werden kann, **dadurch gekennzeichnet, dass** das Sollbruchstellenelement (12, 17) als separates Bauteil ausgeführt ist und mittels separaten Befestigungsmitteln (15) am Tragrahmen befestigt ist.

2. Fahrzeugscheinwerfer (1) nach Anspruch 1, **dadurch gekennzeichnet, dass** der Tragrahmen (7) zumindest einen ersten Tragrahmenteil (8) und zumindest einen zweiten Tragrahmenteil (9) aufweist und das Sollbruchstellenelement (12, 17) zwischen dem ersten (8) und dem zweiten Tragrahmenteil (9) angeordnet ist.

3. Fahrzeugscheinwerfer (1) nach Anspruch 2, **dadurch gekennzeichnet, dass** zwischen dem ersten (8) und dem zweiten Tragrahmenteil (9) ein Verbindungsrahmenteil (10) vorgesehen ist und zumindest ein Sollbruchstellenelement (12, 17) zwischen dem ersten Tragrahmenteil (8) und dem Verbindungsstück (10) und/oder zumindest ein Sollbruchstellenelement (12, 17) zwischen dem zweiten Tragrahmenteil (9) und dem Verbindungsstück (10) und/oder zumindest ein Sollbruchstellenelement (12, 17) am Verbindungsstück (10) angeordnet ist.

4. Fahrzeugscheinwerfer (1) nach einem der Ansprüche 1 bis 3, **dadurch gekennzeichnet, dass** der Tragrahmen (7) zur Aufnahme des Sollbruchstellenelements (12) eine Aussparung/ Unterbrechung aufweist.

5. Fahrzeugscheinwerfer (1) nach einem der Ansprüche 1 bis 4, **dadurch gekennzeichnet, dass** das Sollbruchstellenelement (12, 17) zumindest eine Materialschwächung (13, 20) zum gezielten Brechen aufweist.

6. Fahrzeugscheinwerfer (1) nach einem der Ansprüche 1 bis 5, **dadurch gekennzeichnet, dass** das Sollbruchstellenelement (12, 17) eine sich durch einen Großteil des Elements erstreckende schlitzartige Freistellung (14) aufweist.

7. Fahrzeugscheinwerfer (1) nach Anspruch 6, **dadurch gekennzeichnet, dass** die Freistellung (14) parallel zu den Rändern der Aussparung/Unterbrechung im Tragrahmen (7) verläuft.

8. Fahrzeugscheinwerfer (1) nach Anspruch 6 oder 7, **dadurch gekennzeichnet, dass** die schlitzartige Freistellung (14) an ihrem oberen Ende auf Seiten der Oberseite des Tragrahmens (7) und/oder an ihrem unteren Ende auf Seiten der Unterseite des Tragrahmens (7) von einer Materialschwächung (13, 13') begrenzt wird.

9. Fahrzeugscheinwerfer (1) nach einem der Ansprüche 6 bis 8, **dadurch gekennzeichnet, dass** die schlitzartige Freistellung (14) innerhalb des Sollbruchstellenelements (12, 17) ausgeführt ist und an ihrem oberen und an ihrem unteren Ende von einer Materialschwächung (13, 13') abgeschlossen wird.

10. Fahrzeugscheinwerfer (1) nach einem der Ansprüche 6 bis 9, **dadurch gekennzeichnet, dass** die schlitzartige Freistellung (14) im eingebauten Zustand parallel zur Richtung einer erwarteten Krafteinwirkung angeordnet ist.

11. Fahrzeugscheinwerfer (1) nach einem der Ansprüche 1 bis 5, **dadurch gekennzeichnet, dass** das Sollbruchstellenelement (17) als Schraubdom (18) mit einem rundlaufenden Klemmabschnitt (19) ausgeführt ist und mit einer Schraube (15) als Befestigungsmittel im Tragrahmen befestigt ist, wobei Materialschwächungen (20) zwischen Klemmabschnitt (19) und Schraubdom (18) ausgeführt sind.

12. Fahrzeugscheinwerfer (1) nach einem der vorhergehenden Ansprüche, **dadurch gekennzeichnet, dass** das Gehäuse (3) zumindest eine Gehäuse-Sollbruchstelle (4) aufweist.

13. Fahrzeugscheinwerfer (1) nach Anspruch 12, **dadurch gekennzeichnet, dass** die Gehäuse-Sollbruchstelle (4) benachbart zur Abdeckscheibe (2) angeordnet ist.

## Claims

1. Vehicle headlight (1) having at least one housing (3) which is closed by a cover lens (2), the vehicle headlight having at least one supporting frame (7), the supporting frame (7) being suitable for accommodating at least one lighting unit (5, 6) and the supporting frame (7) having at least one predetermined breaking point element (12, 17), so that in the event of a collision the supporting frame breaks in a targeted manner and so that the impact energy can be dissipated by displacing and/or deforming the supporting frame, **characterized in that** the predetermined breaking point element (12, 17) is designed as a separate component and is fastened to the supporting frame by means of separate fastening means (15).

2. Vehicle headlamp (1) according to claim 1, **characterized in that** the support frame (7) comprises at least one first support frame part (8) and at least one second support frame part (9) and the predetermined breaking point element (12, 17) is arranged between the first (8) and the second support frame part (9).

3. Vehicle headlamp (1) according to claim 2, **characterized in that** a connecting frame part (10) is provided between the first (8) and the second supporting frame part (9) and at least one predetermined breaking point element (12,17) is arranged between the first supporting frame part (8) and the connecting piece (10) and/or at least one predetermined breaking point element (12,17) is arranged between the second supporting frame part (9) and the connecting piece (10) and/ or at least one predetermined breaking point element (12, 17) is arranged on the connecting piece (10).

4. Vehicle headlamp (1) according to one of claims 1 to 3, **characterized in that** the supporting frame (7) has a recess/interruption for receiving the predetermined breaking point element (12).

5. Vehicle headlamp (1) according to one of claims 1 to 4, **characterized in that** the predetermined breaking point element (12, 17) has at least one weakened material (13, 20) for targeted breaking.

6. Vehicle headlamp (1) according to one of claims 1 to 5, **characterized in that** the predetermined breaking point element (12,17) has a slot-like clearance (14) extending through a large part of the element.

7. Vehicle headlamp (1) according to claim 6, **characterized in that** the clearance (14) extends parallel to the edges of the recess/interruption in the supporting frame (7).

8. Vehicle headlamp (1) according to claim 6 or 7, **characterized in that** the slot-like clearance (14) is bounded at its upper end on sides of the upper side of the supporting frame (7) and/or at its lower end on sides of the underside of the supporting frame (7) by a material weakening (13, 13').

9. Vehicle headlamp (1) according to one of claims 6 to 8, **characterized in that** the slot-like clearance (14) is implemented within the predetermined breaking point element (12, 17) and is terminated at its upper and lower ends by a material weakening (13, 13').

10. Vehicle headlamp (1) according to one of claims 6 to 9, **characterized in that** the slot-like release (14) is arranged parallel to the direction of an expected application of force in the installed state.

11. Vehicle headlamp (1) according to one of the claims 1 to 5, **characterized in that** the predetermined breaking point element (17) is designed as a screw dome (18) with a circular clamping section (19) and is fastened in the supporting frame with a screw (15) as fastening means, material weaknesses (20) being formed between clamping section (19) and screw dome (18).

12. Vehicle headlamp (1) according to one of the preceding claims, **characterized in that** the housing (3) has at least one housing predetermined breaking point (4).

13. Vehicle headlamp (1) according to claim 12, **characterized in that** the housing (3) has at least one predetermined breaking point (4) adjacent to the cover lens (2).

## Revendications

1. Phare de véhicule (1) avec au moins un boîtier (3) qui est fermé par une glace (2), le phare de véhicule présentant au moins un cadre porteur (7), le cadre porteur (7) étant approprié pour recevoir au moins une unité d'éclairage (5, 6) et le cadre porteur (7) présentant au moins un élément de point de rupture (12, 17), de sorte qu'en cas de collision, le cadre porteur se brise de manière ciblée et que l'énergie d'impact peut être dissipée par déplacement et/ou déformation du cadre porteur, **caractérisé en ce que** l'élément de point de rupture prédéterminé (12, 17) est conçu comme un composant séparé et est fixé au cadre porteur à l'aide de moyens de fixation séparés (15).

2. Phare de véhicule (1) selon la revendication 1, **caractérisé en ce que** le cadre porteur (7) comprend au moins une première partie de cadre porteur (8) et au moins une deuxième partie de cadre porteur (9) et l'élément de point de rupture prédéterminé (12, 17) est disposé entre la première (8) et la deuxième partie de cadre porteur (9).

3. Phare de véhicule (1) selon la revendication 2, **caractérisé en ce qu'**une partie de cadre de liaison (10) est prévue entre la première (8) et la deuxième partie de cadre porteur (9) et au moins un élément de point de rupture (12, 17) est disposé entre la première partie de cadre porteur (8) et la pièce de liaison (10) et/ou au moins un élément de point de rupture (12, 17) est disposé entre la deuxième partie de cadre porteur (9) et la pièce de liaison (10) et/ou au moins un élément de point de rupture (12, 17) est disposé sur la pièce de liaison (10).

4. Phare de véhicule (1) selon l'une des revendications 1 à 3, **caractérisé en ce que** le cadre porteur (7) présente un évidement/interruption pour recevoir l'élément de point de rupture prédéterminé (12).

5. Phare de véhicule (1) selon l'une des revendications 1 à 4, **caractérisé en ce que** l'élément de point de rupture prédéterminé (12, 17) présente au moins un matériau affaibli (13, 20) pour une rupture ciblée.

6. Phare de véhicule (1) selon l'une des revendications 1 à 5, **caractérisé en ce que** l'élément de point de rupture prédéterminé (12, 17) présente un dégagement (14) en forme de fente s'étendant à travers une grande partie de l'élément.

7. Phare de véhicule (1) selon la revendication 6, **caractérisé en ce que** le dégagement (14) s'étend parallèlement aux bords de l'évidement/interruption dans le cadre porteur (7).

8. Phare de véhicule (1) selon la revendication 6 ou 7, **caractérisé en ce que** le jeu en forme de fente (14) est délimité à son extrémité supérieure sur les côtés de la face supérieure du cadre porteur (7) et/ou à son extrémité inférieure sur les côtés de la face inférieure du cadre porteur (7) par un affaiblissement du matériau (13, 13').

9. Phare de véhicule (1) selon l'une des revendications 6 à 8, **caractérisé en ce que** le jeu en forme de fente (14) est réalisé à l'intérieur de l'élément de point de rupture prédéterminé (12, 17) et se termine à ses extrémités supérieure et inférieure par un affaiblissement du matériau (13, 13').

10. Phare de véhicule (1) selon l'une des revendications 6 à 9, **caractérisé en ce que** le dispositif de déclenchement (14) en forme de fente est disposé parallèlement à la direction d'une application de force prévue à l'état monté.

11. Phare de véhicule (1) selon l'une des revendications 1 à 5, **caractérisé en ce que** l'élément de point de rupture prédéterminé (17) est conçu comme un dôme à vis (18) avec une section de serrage circulaire (19) et est fixé dans le cadre porteur avec une vis (15) comme moyen de fixation, des faiblesses de matériau (20) étant formées entre la section de serrage (19) et le dôme à vis (18).

12. Phare de véhicule (1) selon l'une des revendications précédentes, **caractérisé en ce que** le boîtier (3) présente au moins un point de rupture prédéterminé (4).

13. Phare de véhicule (1) selon la revendication 12, **caractérisé en ce que** le boîtier (3) présente au moins un point de rupture prédéterminé (4) adjacent à la lentille de couverture (2).
